Europäisches Patentamt

European Patent Office

Office européen des brevets

(19)

(11) Veröffentlichungsnummer: **0 350 761**

**A2**

(12) # EUROPÄISCHE PATENTANMELDUNG

(21) Anmeldenummer: **89112141.0**

(22) Anmeldetag: **03.07.89**

(51) Int. Cl.⁴: **B01D 29/15 , B01D 29/64 , B01D 29/70**

(30) Priorität: **11.07.88 DE 3823486**

(43) Veröffentlichungstag der Anmeldung:
**17.01.90 Patentblatt 90/03**

(84) Benannte Vertragsstaaten:
**ES FR GB IT SE**

(71) Anmelder: **Mayfran GmbH**
**Alfredstrasse 295**
**D-4300 Essen 1(DE)**

(72) Erfinder: **von Wietersheim, Klaus**
**Sengenholzer Weg 19**
**D-5628 Heiligenhaus(DE)**
Erfinder: **van Loo, Joseph**
**Vylenerwerg 9**
**NL-6294 AR Vylen(NL)**

(74) Vertreter: **Strehl, Schübel-Hopf, Groening**
**Maximilianstrasse 54 Postfach 22 14 55**
**D-8000 München 22(DE)**

(54) **Trommelseparator für Kühlschmiermittel.**

(57) Die Erfindung betrifft einen Trommelseparator für Kühlschmiermittel mit einem Behälter mit einem Zulauf für verschmutztes Kühlschmiermittel sowie mit einem Auslauf für gereinigtes Kühlschmiermittel. Im Behälter (20) ist eine Separatortrommel (6) vorgesehen, die im Abstand parallel über dem Behälterboden drehbar gelagert und mittels Kratzerketten (24) eines Kratzerkettenförderers für das Austragen von auf dem Behälterboden abgesetztem Schlamm antreibbar ist. Die mit einem Antrieb (1) verbundene Antriebswelle (22) für den Kratzerkettenförderer ist oberhalb des Kühlschmiermittelzulaufs angeordnet, während die Umlenkwelle des Kratzerkettenförderers über dem Behälterboden angeordnet ist. Die Separatortrommel (6) bildet die Umlenkwelle des Kratzerkettenförderers (21). Dadurch wird eine besondere Umlenkstation für den Kratzerkettenförderer eingespart und eine stets sichere Mitnahme der Separatortrommel durch den angetriebenen Kratzerkettenförderer erreicht.

FIG. 1

## Trommelseparator für Kühlschmiermittel

Die Erfindung betrifft einen Trommelseparator für Kühlschmiermittel gemäß dem Oberbegriff des Patentanspruchs 1.

Bei einem Trommelseparator der vorgenannten Gattung ist es bekannt, die Separatortrommel in der Nähe der Umlenkstation für den Kratzerkettenförderer zwischen dem Obertrum und dem Untertrum desselben anzuordnen, die separate Trommel jedoch unabhängig von der Umlenkstation für die Kratzerketten zu lagern. Dies bedingt eine verhältnismäßig große Bauweise des Trommelseparators, die mit einem verhältnismäßig hohen Aufwand verbunden ist.

Demgegenüber liegt der Erfindung die Aufgabe zugrunde, einen Trommelseparator der dem Oberbegriff des Patentanspruchs 1 entsprechenden Gattung so zu verbessern, daß dieser sehr kompakt und wirtschaftlich hergestellt werden kann.

Die Erfindung löst diese Aufgabe durch die im Kennzeichen des Patentanspruchs 1 enthaltenen Merkmale. Hierdurch wird erreicht, daß eine besondere Umlenkstation für den Kratzerkettenförderer eingespart wird und infolge der Ausbildung der Separatortrommel als Umlenkstation stets eine sichere Mitnahme der Separatortrommel durch den angetriebenen Kratzerkettenförderer erreicht wird.

Vorteilhafte Weiterbildungen sind in den Ansprüchen 2 bis 5 enthalten.

Die Erfindung ist nachstehend anhand der schematischen Zeichnung eines Ausführungsbeispiels näher erläutert. Es zeigen:

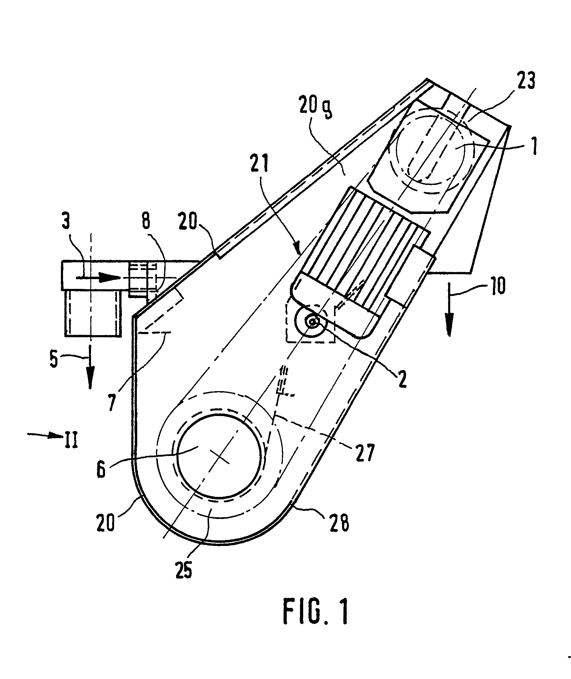

Fig. 1 eine Seitenansicht eines Trommelseparators,

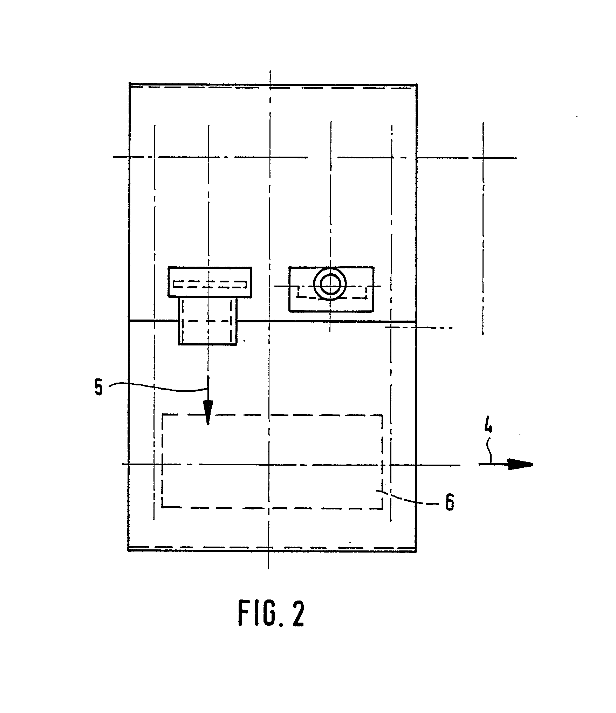

Fig. 2 eine Vorderansicht des Trommelseparators gemäß Fig. 1 in Richtung des Pfeiles II,

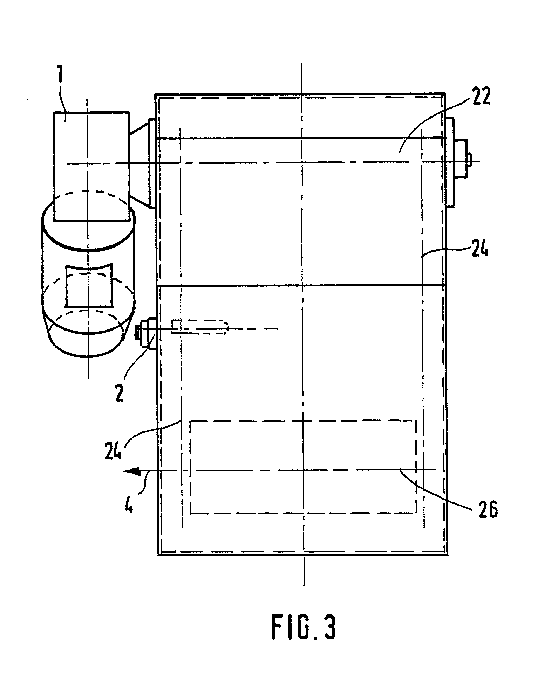

Fig. 3 eine Rückansicht des Trommelseparators in Fig. 1 in Richtung des Pfeiles III und

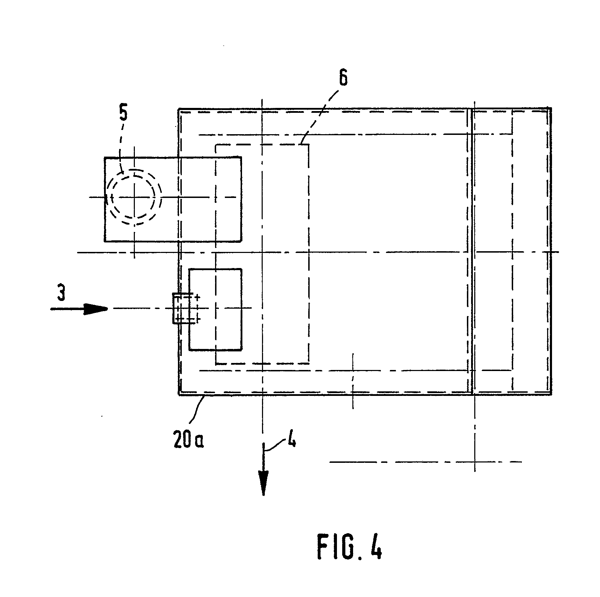

Fig. 4 eine Draufsicht des Trommelseparators in Fig. 1.

In den Fig. ist ein Trommelseparator für Kühlschmiermittel veranschaulicht, der zum Trennen von Kühlschmiermittel (Flüssigkeit) und feinen Spänen sowie Schlamm, also von Schmutzteilen, dient. Beispielsweise fallen bei einer Zerspanungsmaschine Späne und Kühlschmiermittel bei der Bearbeitung von Werkstücken gleichzeitig gemischt an. Mit einem Späneförderer, z. B. einem Scharnierbandförderer, werden die groben Späne aus dem Kühlschmiermittel im Rahmen einer Grobtrennung herausgefördert. Das aus dem Späneförderer abfließende Kühlschmiermittel enthält noch Verunreinigungen, die bei Wiederverwendung in der Werkzeugmaschine zu Störungen entweder durch Absetzen in den Leitungen oder Tanks oder durch Aufbau auf der Werkzeugschneide führen.

Um dies zu vermeiden, wird mittels des Trommelseparators aus dem Späneförderer austretendes Kühlschmiermittel von seinen Verunreinigungen getrennt.

Ein Zulauf 3 für verschmutztes Kühlschmiermittel ist am oberen Rand eines Behälters 20 vorgesehen, neben dem ein Überlauf 5 angeordnet ist. Das verschmutzte Kühlschmiermittel wird entweder mit einer nicht gezeigten Pumpe oder durch den Überlauf 5 von einem Förderer unmittelbar dort eingebracht. Der Behälter 20 füllt sich. Im unteren Teil des Behälters 20 ist eine horizontal liegende Separatortrommel 6 mittels von ihren Stirnseiten koaxial zu ihrer Mittellängsachse vorstehender zylindrischer Ansätze (nicht gezeigt) drehbar gelagert. Die Separatortrommel kann z. B. als Spaltsiebtrommel oder Lochblechtrommel ausgebildet sein. Durch den statischen Druck wird das Kühlschmiermittel durch die Separatortrommel gedrückt, wobei die Schmutzpartikel oder Späne auf dem Umfang des trommelförmigen Spaltsiebes oder Lochbleches einen Filterkuchen bilden. Das gereinigte Kühlschmiermittel kann axial seitlich aus einem Auslauf 4 austreten, der koaxial zur Achse der Separatortrommel 6 in der Seitenwand 20a des Behälters 20 vorgesehen ist. Soll ein höherer Druckunterschied zwischen der Außenseite und Innenseite der Separatortrommel 6 erreicht werden, kann der Saugteil der nicht gezeigten Pumpe an den Auslauf 4 angeschlossen werden, wodurch der Durchfluß je Zeiteinheit erhöht wird. Je stärker der sich aufbauende Filterkuchen wird, umso mehr vermindert sich der Durchfluß des Kühlschmiermittels. Bei gleichbleibendem Zufluß des Kühlschmiermittels steigt der Kühlschmiermittelspiegel im Behälter und erreicht den Pegel 8, an dem er einen Schwimmerschalter 2 betätigt, der einen aus Antriebsmotor und Untersetzungsgetriebs bestehenden Antrieb 1 in Bewegung setzt. Die Antriebswelle 22 des Antriebs 1 ist mit Kratzerketten-Zahnrädern 23 versehen, mittels welcher die Kratzerketten 24 angetrieben werden, welche über Kettenräder 25 laufen, die an den beiden Stirnseiten der Separatortrommel 6 befestigt sind. Hierdurch wird die Separatortrommel 6 gedreht und der auf ihrem Umfang niedergeschlagene Filterkuchen wird durch einen Abstreifer 27 von der Separatortrommel 6 getrennt und fällt auf den Behälterboden 28. Da zwischen den Kratzerketten 24 nicht dargestellte bekannte Kratzbleche angeordnet sind, die sich am Behälterboden 28 schräg aufwärts bewegen, nehmen diese Kratzbleche den auf dem Behälterboden abgesetzten Filterschlamm mit und tragen ihn bei 10 aus. Wird der Trommelseparator über einem Förderer angeordnet, kann der Schlamm in den Förderer ausgetragen werden. Andernfalls ist zur Aufnahme des Schlamms ein Behälter vorgesehen.

Die ganz oder teilweise vom Filterkuchen befreite Separatortrommel 6 bietet wieder einen besseren Durchfluß, so daß der Flüssigkeitsspiegel auf die Höhe des Pegels 7 sinkt. Der Schwimmerschalter 2 schaltet jetzt in seiner unteren Stellung den Antrieb 1 wieder ab. Wird mehr verschmutztes Kühlschmiermittel zugeführt als durch die Separatortrommel 6 abgeführt werden kann, läuft das überschüssige Kühlschmiermittel in Höhe des Überlaufpegels 9 über den Überlauf 5 wieder in den Schmutztank.

Da die Welle 26 der Separatortrommel 6 die Umlenkwelle des Kratzerkettenförderer 21 bildet, wird eine außerordentlich kompakte und in der Herstellung wirtschaftliche Ausführung des Trommelseparators erreicht.

## Ansprüche

1. Trommelseparator für Kühlschmiermittel, bestehend aus einem Behälter, der am oberen Rand mit einem Zulauf für verschmutztes Kühlschmiermittel sowie mit einem Auslauf für gereinigtes Kühlschmiermittel versehen ist, der in einer Seitenwand des Behälters im Bereich der Stirnseite einer Separatortrommel vorgesehen ist, die im Abstand parallel über dem Behälterboden drehbar gelagert und mittels der Kratzerketten eines Kratzerkettenförderers für das Austragen von auf dem Behälterboden abgesetzten Schlamm antreibbar ist, wobei die mit einem Antriebsmotor verbundene Antriebswelle für den Kratzerkettenförderer oberhalb des Kühlschmiermittel-Zulaufs und die Umlenkwelle des Kratzerkettenförderers über dem Behälterboden angeordnet sind, dadurch gekennzeichnet, daß die Separatortrommel (6) die Umlenkwelle des Kratzerkettenförderers (21) bildet.

2. Trommelseparator nach Anspruch 1, dadurch gekennzeichnet, daß die Kratzerketten-Zahnräder (25) an den beiden Stirnseiten der Separatortrommel (6) befestigt sind.

3. Trommelseparator nach den Ansprüchen 1 oder 2, dadurch gekennzeichnet, daß die Saugseite einer Pumpe an den Auslauf (4) angeschlossen ist.

4. Trommelseparator nach einem der Ansprüche 1 bis 3, dadurch gekennzeichnet, daß ein Abstreifer (27) für den Filterkuchen im Bereich des Fördertrums der Kratzerkette (24) nahe der Separatortrommel (6) im Behälter (20) beweglich befestigt ist.

5. Trommelseparator nach einem der Ansprüche 1 bis 4, dadurch gekennzeichnet, daß der Antriebsmotor (1) des Kratzerkettenförderers (21) mit einem Schwimmerschalter (2) verbunden ist.

FIG. 1

FIG. 2

FIG.3

FIG. 4